# EUROPÄISCHE PATENTSCHRIFT

(11) **EP 2 724 038 B1**
(45) Veröffentlichungstag und Bekanntmachung des Hinweises auf die Patenterteilung: **03.06.2015**
(21) Anmeldenummer: 12735485.0
(22) Anmeldetag: 22.06.2012
(51) Int. Cl.: F16C 11/04, F16C 32/02

(54) **SCHWENKLAGER ZUR REIBUNGSARMEN LAGERUNG VON BAUTEILEN**
PIVOT BEARING FOR THE LOW-FRICTION SUPPORT OF COMPONENTS
PALIER PIVOTANT DESTINÉ AU MONTAGE D'ÉLÉMENTS AVEC UN MINIMUM DE FROTTEMENTS

(30) Priorität: 24.06.2011 AT 9312011
(43) Veröffentlichungstag der Anmeldung: 30.04.2014
(73) Patentinhaber: IAT 21 Innovative Aeronautics Technologies GmbH, 4040 Linz (AT)
(72) Erfinder: SCHWAIGER, Meinhard, A-4040 Linz (AT)
(74) Vertreter: Babeluk, Michael
(86) Internationale Anmeldenummer: PCT/EP2012/062051
(87) Internationale Veröffentlichungsnummer: WO 2012/175653

(56) Entgegenhaltungen:
- FR-A5- 2 253 347
- US-A- 4 997 123

## Beschreibung

Die Erfindung betrifft ein Schwenklager zur reibungsarmen Lagerung von Bauteilen gemäß dem Oberbegriff von Patentanspruch 1.

Ein solches Schwenklager besitzt einen zylindrischen Lagerkörper und einen darin schwenkbar angeordneten Lagerteil, wobei der Lagerkörper eine im Wesentlichen radial angeordnete Rippe aufweist, auf der zumindest eine erste Abrollfläche ausgebildet ist und wobei der Lagerteil einen Wälzkörper mit einem zylinderförmigen Rollabschnitt an der Spitze aufweist, der auf der Abrollfläche abrollt.

Insbesondere wird ein hochbeanspruchtes Schwenklager dargestellt, vorzugsweise eingesetzt bei hohen radialen Belastungen wie z. B. in Zentrifugen, mit deutlich verringerter Reibung.

Schwenklager dienen zur Lagerung von Maschinenelementen die einer Drehbewegung um eine Rotationsachse ausgesetzt sind und deren Drehwinkel keine volle Umdrehung von 360° aufweisen. Dabei entsteht eine oszillierende Bewegung um eine Drehachse, mit einem mehr oder weniger konstanten Schwenkwinkel und einer ungleichmäßigen Drehgeschwindigkeit zwischen Null und einem positiven sowie negativen Maximalwert.

Gleitlager sind für derartige Einsatzbedingungen deshalb nicht besonders gut geeignet, da aufgrund der Schwenkbewegung und der ungleichmäßigen Relativgeschwindigkeiten zwischen dem Lagerbolzen und der Lagerbohrung im Lagerspalt der Aufbau eines hydrodynamischen Schmierfilmes kaum möglich ist. Dies führt zu erhöhten Reibungseffekten und dementsprechend zu erhöhtem Verschleiß und geringer Lebensdauer. In Zentrifugen entsteht zusätzlich eine radial nach außen gerichtete Beschleunigung (Zentrifugalbeschleunigung), die dazu führt, dass Schmiermittel in zylindrischen Lagerbohrungen in den am weitesten von der Rotationsmitte entfernten Randbereich der Lagerbohrung zusammenfließt und bei Fehlen einer geeigneten Lagerabdichtung aus der Lagerbohrung in Achsrichtung hinaus gefördert und durch die Zentrifugalbeschleunigung radial nach außen vom Lagerbohrungsrand weggeschleudert wird. Somit ist neben dem erhöhten Schmiermittelaustritt aus der Lagerbohrung, dem verringerten verbleibenden Schmiermittelvolumen im Gleitlager zusätzlich der verringerte oder kaum vorhandene hydrodynamische Schmierfilm als Nachteil anzuführen.

Wälzlager weisen in der Regel ein gegenüber Gleitlagern (aus Kunststoff) höheres Gewicht auf und bei hohen Zentrifugalbeschleunigungen eine ungünstige Schmiermittelverteilung. Dadurch wird ein erhöhter Verschleiß bedingt. Innerhalb der Gruppe der Wälzlager weisen Nadellager die günstigsten Verhältnisse (Gewicht, Reibung, ...) für derartige Anwendungen auf. Bei derartigen Wälzlagern werden zylinderförmige Rollen mit einem gegenüber dem Lagerdurchmesser kleinem Wälzkörperdurchmesser zwischen der Lauffläche des Außenringes und des Innenringes (zumeist dem Lagerbolzen) abgerollt. Die Lagerreibung wird dabei aus der Rollreibung des Wälzkörpers und dem mittleren Radius der Laufflächen des Außenringes und des Innenringes gebildet. Gegenüber Gleitlagern weisen Wälzlager eine geringere Reibung auf.

Des Weiteren sind flexible Schwenklager auf der Basis von elastisch verformbaren dünnwandigen Membranen aus Kunststoff oder Metall, die kreuzweise angeordnet sind, bekannt. In der US 3,807,029 A (Troeger H., 1974), US 3,811,665 A (Selig F., 1974), US 3,813,089 A (Tröger H., 1974) und US 3,825,992 A (Troeger H., 1974) sind Schwenklager beschrieben, deren Grundprinzip auf kreuzweise angeordneten Federelementen beruht, wobei ein zylindrischer Mittelkörper in der Lagerbohrung verdrehfest eingefügt wird und ein zweiter zylindrischer Körper gegenüber dem ersten verdrehbar mit dem zu lagernden Maschinenelement verbunden ist; auf diese Weise entsteht eine einseitige Drehlagerung. In einer zweiten Ausführungsvariante sind zwei miteinander starr verbundene zylindrische Hohlwellen mittels kreuzweise angeordneter Membranen gegenüber dem verdrehfest in die Lagerbohrung eingefügten Mittelkörper derart verbunden, dass ein Drehmoment bzw. eine Drehbewegung von einem Seitenteil auf den anderen übertragen werden kann. Auf diese Weise kann eine Drehbewegung durch den Mittelkörper von einer Seite auf die gegenüberliegende Seite übertragen werden. Derartige Schwenklagerungen arbeiten reibungsfrei, weisen jedoch den Nachteil auf, dass nur verhältnismäßig geringe Radialkräfte aufgenommen und nur geringe Schwenkwinkel ausgeführt werden können. Typische maximale Schwenkwinkel liegen bei ca. +/- 30° (bei sehr geringer Radialbelastung) und bei höheren Belastungen können Schwenkwinkel von nur wenigen ° ausgeführt werden. Aus diesem Grund finden derartige elastische Schwenklagerungen Anwendung, wo nur geringe Radialkräfte auftreten, wie z. B. in Speicherlaufwerken von Computern, Messgeräten u. ähnlichem. Eine weitere elastische Schwenklagerung ist aus der US 5505555 A (Van Kann Frank J; Buckingham Michael J, 1996) bekannt, die ebenfalls die zuvor genannten Einschränkungen aufweist und deshalb nur in speziellen Messgeräten, wie z.B. Beschleunigungssensoren, Anwendung findet.

Die GB 146,119 A beschreibt eine Gelenksanordnung, bei dem Zugkräfte über profilierte Flächen übertragen werden können. Im Fall von Druckkräften wirkt die Gelenkanordnung jedoch in der Art eines Gleitlagers mit entsprechenden Nachteilen.

Die US 4,997,123 A offenbart ein Schwenklager der obigen Art mit einer radial im Lagerkörper angeordneten Rippe. Belastbarkeit und Schwenkwinkel eines solchen Lagers sind begrenzt.

Aufgabe der gegenständlichen Erfindung ist es, ein hochbelastbares Schwenklager für größere Schwenkwinkel zur Verfügung zu stellen, mit dem die Nachteile von hochbeanspruchten Gleitlagen in Zentrifugen, die Nachteile von Wälzlagern und die Nachteile von elastischen Schwenklagern deutlich verringert werden können. Insbesondere sollen Kräfte in jeglicher Richtung sicher aufgenommen werden können und eine hohe Belastbarkeit und ein großer Schwenkwinkel erreichbar sein.

Erfindungsgemäß werden diese Aufgaben gemäß Patentanspruch 1 dadurch gelöst, dass der Lagerteil zwei Abschnitte aufweist, nämlich einen Halteteil und einen Verbindungsteil, die beidseits der Rippe angeordnet sind. Das bedeutet insbesondere, dass auf einer annähernd in der Mittelachse des Schwenklagers angeordneten starren Abrollfläche ein Wälzkörper abrollbar angeordnet ist und dieser Wälzkörper ein fester Bestandteil des schwenkbaren Lagerteils ist. Typischerweise besitzt der Rollabschnitt einen deutlich kleinere Durchmesser als der Lagerkörper des Schwenklagers. Die Schwenkbewegung wir erfindungsgemäß primär durch eine Rollbewegung des Wälzkörpers bewirkt, so dass Gleitreibung weitgehend vermieden wird. Durch den Verbindungsteil kann eine besonders große mechanische Stabilität erzielt werden.

Ein unzulässiges Spiel kann insbesondere dadurch vermieden werden, dass der Lagerteil einen Halteteil aufweist, der einen im Wesentlichen kreissektorförmigen Querschnitt hat. Wesentlich an dem kreissektorförmigen Querschnitt des Halteteils ist, dass während der Abrollbewegung die zur Abrollfläche parallele Tagente des Halteteils unverändert bleibt. Wenn der Wälzkörper einen nicht kreisförmigen Querschnitt aufweist, weicht der Querschnitt des Halteteils so von einer kreissektorförmigen Ausbildung ab, dass sich ein "Gleichdick" ergibt, das wiederum eine konstante obere Tagente aufweist.

In besonders begünstigter Weise ist vorgesehen, dass der Lagerkörper einen im Wesentlichen halbzylindrisch ausgebildeten Zentrierteil aufweist. Der Zentrierteil liegt dabei im Wesentlichen den Freiheitsgrad des Lagerteils fest.

Eine unzulässige Bewegung des Lagerteils wird dadurch vermieden, dass der Zentrierteil eine der Abrollfläche gegenüberliegende Gleitfläche aufweist. Der Lagerteil liegt während seiner Bewegung stets an der Gleitfläche an oder ist bei Belastung geringfügig von der Gleitfläche entfernt. Jedenfalls wird dadurch ein unzulässiges Spiel in allen Stellungen verhindert.

Eine weitere besonders begünstigte Ausführungsvariante sieht vor, dass der Zentrierteil im Bereich der Rippe Zentrierflächen aufweist. Die Zentrierflächen begrenzen eine mögliche seitliche Bewegung des Lagerteils.

Eine besonders kompakte Ausführung des Schwenklagers wird erreicht, wenn der Lagerkörper beidseits der Rippe jeweils eine halbzylindrische Schale aufweist, die die Rippe hält.

Die Kinematik des Schwenklagers ist besonders vorteilhaft, wenn die Abrollfläche gegenüber dem Mittelpunkt des Schwenklagers versenkt ist. Dies bedeutet, dass der Mittelpunkt außerhalb der Rippe liegt. Darüber hinaus ist es von besonderem Vorteil, wenn der Mittelpunkt des Wälzkörpers einen Abstand vom Mittelpunkt des Schwenklagers aufweist, der kleiner ist als der Radius des Wälzkörpers. Wenn sich die Rippe somit unterhalb des Mittelpunkts des Schwenklagers befindet, so befindet sich der Mittelpunkt des Wälzkörpers oberhalb dieses Mittelpunkts.

Es ist von besonderem Vorteil, wenn der Verbindungsteil einen im Wesentlichen kreissektorförmigen Querschnitt aufweist. Dadurch kann ein optimaler Belastungsquerschnitt erzielt werden.

In der Folge wird die Erfindung anhand der in den Figuren dargestellten Ausführungsbeispielen näher erläutert. Es zeigen schematisch:
- Fig. 1: eine allgemeine seitliche Ansicht eines Schwenklagers;
- Fig. 2: eine axonometrische Ansicht des Lagers von Fig. 1;
- Fig. 3: Explosionsdarstellung des Lagers von Fig. 1 in einer Axialansicht;
- Fig. 4: eine Axialansicht in vergrößertem Maßstab;
- Fig. 5: eine axonometrische Darstellung des Schwenklagers von Fig. 4;
- Fig. 6: eine Ansicht entsprechend Fig. 4 in einer anderen Stellung des Schwenklagers; und
- Fig. 7: ein Detail von Fig. 6.

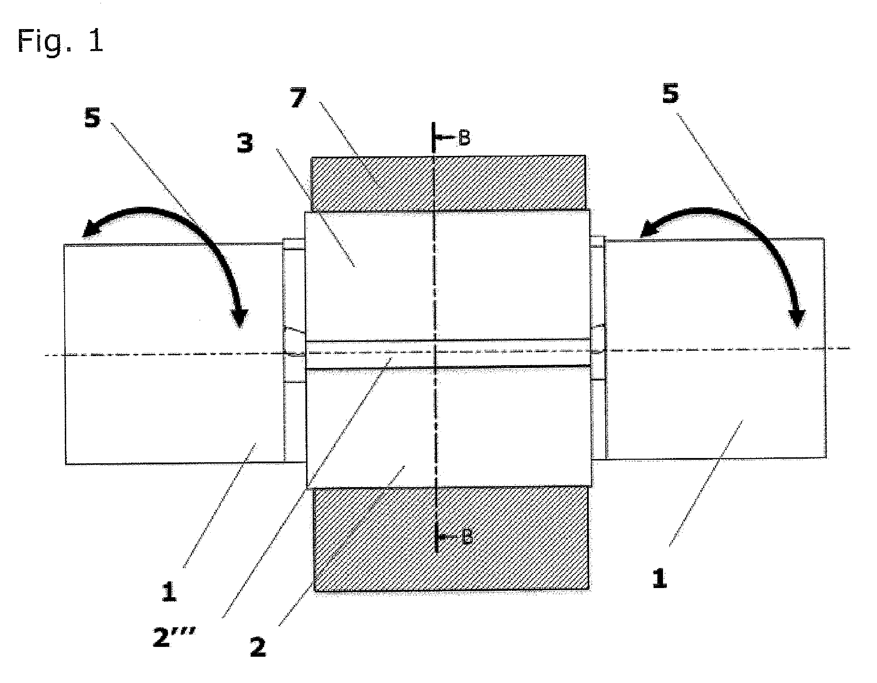

Fig. 1 zeigt eine erfindungsgemäße Schwenklagerkonfiguration in Seitenansicht. Die Schwenklagerkonfiguration besteht aus dem schwenkbaren Lagerteil 1, der in einem zylindrischen Lagerkörper 2, 2"', 3, eingefügt ist, der verdrehfest in einer Lagerbohrung in einem nicht näher dargestellten Maschinenelement 7, wie z.B. einer Zentrifuge, angeordnet ist. Der schwenkbare Lagerteil 1 ist in Schwenkrichtung 5 verdrehbar gegenüber dem feststehenden zylindrischen Lagerkörper 2, 2"', 3. Der Verbindungsteil 1" dient der mechanischen Stabilität, da auf diese Weise der belastbare Querschnitt des Lagerteils wesentlich erhöht werden kann. Insbesondere werden durch die erhöhte Biegesteifigkeit Verformungen vermieden, die ansonsten zu einer Veränderung der geometrischen Eigenschaften im Eingriffsbereich führen würden, was eine deutliche Verringerung der Lebensdauer zur Folge hätte.

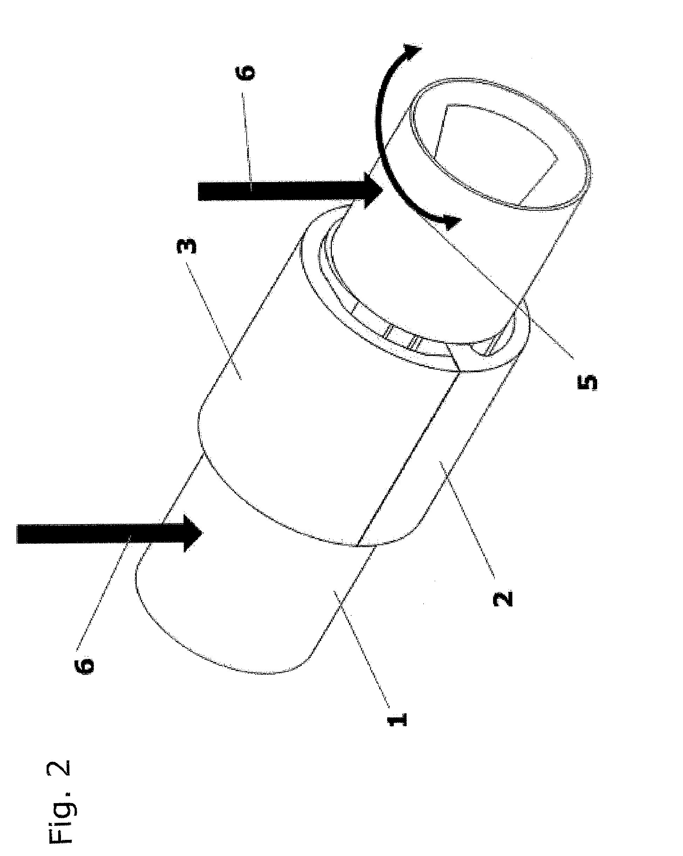

Fig. 2 zeigt die erfindungsgemäße Schwenklagerkonfiguration in Schrägansicht mit der bevorzugten Belastungsrichtung 6 und Schwenkrichtung 5.

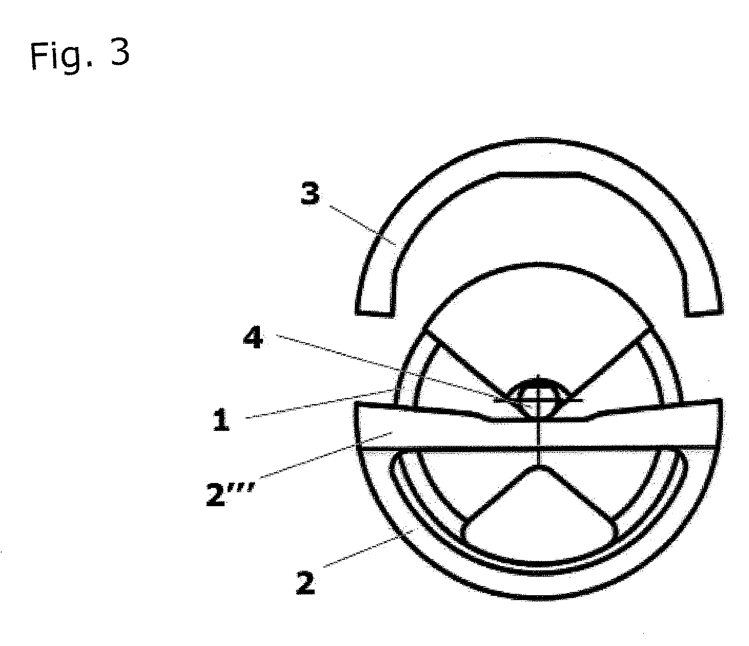

Fig. 3 zeigt die erfindungsgemäße Schwenklagerkonfiguration in einer Explosionsdarstellung und Schnittdarstellung gemäß Schnittlinie B-B aus Fig. 1. Der Zentrierteil 3 ist gegenüber der Rippe 2'" und dem Halteteil 2 im Einbauzustand formschlüssig verbunden und wird in der Lagerbohrung zusammengehalten. Auf der Rippe 2'" wird ein Wälzkörper 4, der mit dem schwenkbaren Lagerteil 1 fest verbunden ist, bei einer Schwenkbewegung abgerollt. Die Rippe 2'" erstreckt sich im Wesentlichen entlang des zylindrischen Raums, den der Halteteil 2 und der Zentrierteil 3 aufspannen.

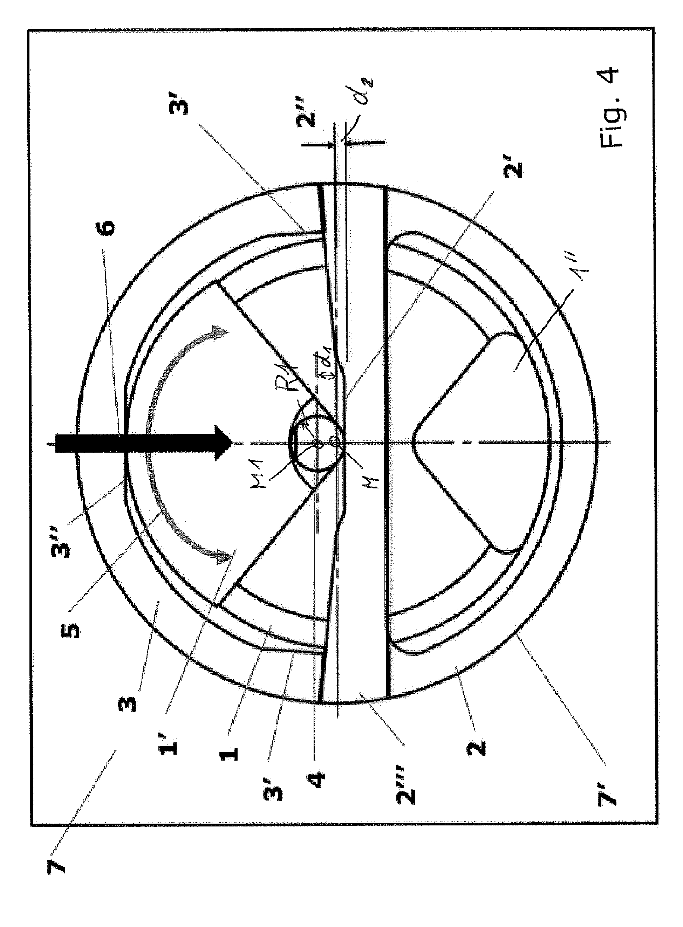

Fig. 4 zeigt die erfindungsgemäße Schwenklagerkonfiguration im Einbauzustand ebenfalls in einer Schnittdarstellung gemäß Schnittlinie B-B aus Fig. 1. In die Lagerbohrung 7' des Maschinenelements 7 wird der zylindrische Lagerkörper 2, 2"', 3 verdrehfest eingefügt und der schwenkbare Lagerteil 1, der fest mit dem Wälzkörper 4 verbunden ist, wird entsprechend der Schwenkbewegung 5 bewegt, wobei eine Abrollbewegung des Wälzkörpers 4 auf der Abrollfläche 2' erfolgt. Der schwenkbare Lagerteil 1 weist über die Länge des Zentrierteiles 3 in der Außenkontur des Halteteils 1' eine als "Gleichdick" ausgeführte Kontur auf, so dass bei einer Schwenkbewegung 5 der schwenkbare Lagerteil 1 mittels der Gleitfläche 3" geführt wird und in den beiden Endlagen mittels der Zentrierflächen 3' nahezu mittig gehalten wird. Unter Belastung gemäß Pfeil 6 ist die Außenkontur des Halteteils 1' des schwenkbaren Lagerteils 1 gegenüber der Zentrierfläche 3' infolge elastischer Verformung in Belastungsrichtung 6 freigestellt und unter Relativbewegung reibungsfrei. Um eine annähernd mittige Schwenkbewegung zu erreichen, ist die Abrollfläche 2' gegenüber dem Lagermittelpunkt um den Betrag 2" (d₂) versetzt.

Der Mittelpunkt Mal des Wälzkörpers 4 besitzt einen Abstand d₁ vom Mittelpunkt M des Schwenklagers. Dieser Abstand d₁ ist kleiner als der Radius R1 des Wälzkörpers 4 und beträgt beispielsweise 80% von R1.

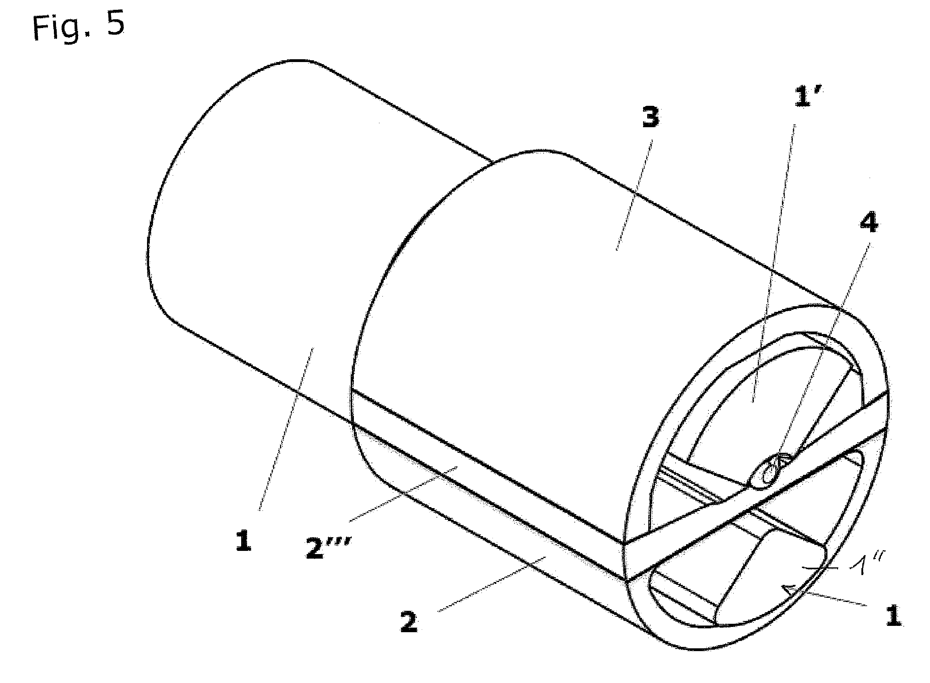

Fig. 5 zeigt das erfindungsgemäße Schwenklager in einer gemäß Schnittlinie B-B aus Fig. 1 geschnittenen Schrägansicht.

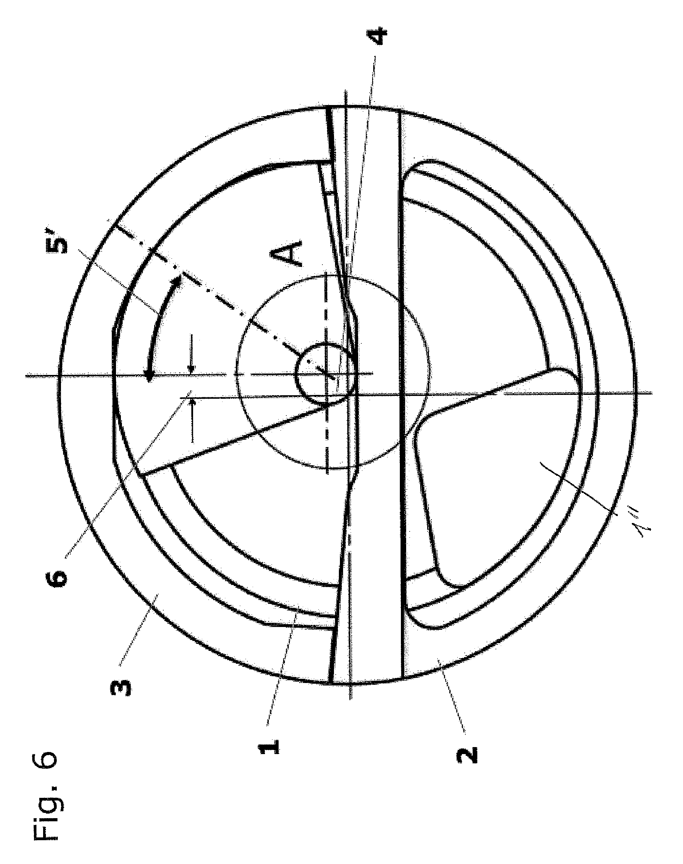

Fig. 6 zeigt das erfindungsgemäße Schwenklager in Schnittansicht gemäß Schnittlinie B-B in Fig. 1 und den Schwenk-/Abrollvorgang. Bei einer Schwenkbewegung um den Betrag 5' wird der Wälzkörper 4 auf der Abrollfläche 2' abgerollt und der Mittelpunkt des Wälzkörpers 4 wird um den Betrag 6 parallel zur Abrollfläche 2' ausgelenkt. Aufgrund des im Verhältnis zum Schwenklagerdurchmesser kleinen Durchmessers des Wälzkörpers 4, die Verhältniszahl beträgt ca. 1:5 bis 1:20, ist die Auslenkbewegung ebenfalls gering und beträgt ca. 0,5% bis 5% des Schwenklagerdurchmessers.

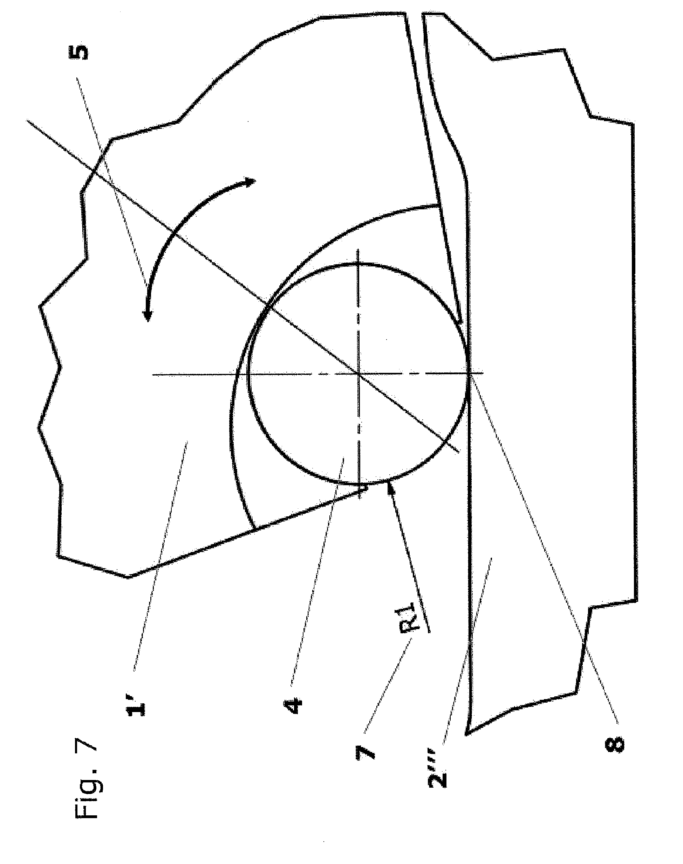

Fig. 7 zeigt eine Detaildarstellung von Fig. 6. Der Wälzkörper 4 rollt auf der Abrollfläche 2' ab und weist einen Radius R1 7 und einen Kontaktpunkt 8 auf.

## Patentansprüche

1. Schwenklager zur reibungsarmen Lagerung von Bauteilen, mit einem zylindrischen Lagerkörper (2, 2"', 3) und einem darin schwenkbar angeordneten Lagerteil (1), wobei der Lagerkörper (2, 2"', 3) eine im Wesentlichen radial angeordnete Rippe (2"') aufweist, **dadurch gekennzeichnet, dass** auf dieser Rippe (2"') zumindest eine erste Abrollfläche (2') ausgebildet ist und wobei der Lagerteil (1) einen Wälzkörper (4) mit einem zylinderförmigen Rollabschnitt an der Spitze aufweist, der auf der Abrollfläche (2') abrollt, und der Lagerteil (1) zwei Abschnitte aufweist, nämlich einen Halteteil (1') und einen Verbindungsteil (1"), die beidseits der Rippe (2"') angeordnet sind.

2. Schwenklager nach Anspruch 1, **dadurch gekennzeichnet, dass** der Lagerteil (1) einen Halteteil (1') aufweist, der einen im Wesentlichen kreissektorförmigen Querschnitt hat.

3. Schwenklager nach einem der Ansprüche 1 oder 2, **dadurch gekennzeichnet, dass** der Lagerkörper (2, 2"', 3) einen im Wesentlichen halbzylindrisch ausgebildeten Zentrierteil (3) aufweist.

4. Schwenklager nach Anspruch 3, **dadurch gekennzeichnet, dass** der Zentrierteil (3) eine der Abrollfläche (2') gegenüberliegende Gleitfläche (3") aufweist.

5. Schwenklager nach einem der Ansprüche 3 oder 4, **dadurch gekennzeichnet, dass** der Zentrierteil (3) im Bereich der Rippe (2"') Zentrierflächen (3') aufweist.

6. Schwenklager nach einem der Ansprüche 1 bis 5, **dadurch gekennzeichnet, dass** der Lagerkörper (2, 2"', 3) beidseits der Rippe (2"') jeweils eine halbzylindrische Schale (2, 3) aufweist, die die Rippe (2"') hält.

7. Schwenklager nach einem der Ansprüche 1 bis 6, **dadurch gekennzeichnet, dass** die Abrollfläche (2') gegenüber dem Mittelpunkt (M) des Schwenklagers versenkt ist.

8. Schwenklager nach einem der Ansprüche 1 bis 7, **dadurch gekennzeichnet, dass** der Mittelpunkt (M1) des Wälzkörpers (4) einen Abstand (d₁) vom Mittelpunkt (M) des Schwenklagers aufweist, der kleiner ist als der Radius (R1) des Wälzkörpers (4).

9. Schwenklager nach einem der Ansprüche 1 bis 8, **dadurch gekennzeichnet, dass** sich die Rippe (2"') im Wesentlichen entlang eines Durchmessers der Lagerbohrung erstreckt.

10. Schwenklager nach einem der Ansprüche 1 bis 8, **dadurch gekennzeichnet, dass** der Verbindungsteil (1") einen im Wesentlichen kreissektorförmigen Querschnitt aufweist.

## Claims

1. A pivot bearing for low-friction bearing of components, comprising a cylindrical bearing body (2, 2"', 3) and a bearing part (1) pivotably arranged therein, wherein the bearing body (2, 2"', 3) has a substantially radially arranged rib (2"'), **characterised in that** on this rib (2"'), at least one first rolling surface (2') is formed, and wherein the bearing part (1) has a rolling body (4) having a cylindrical rolling section at the tip, which rolling section rolls on the rolling surface (2'), and the bearing part (1) has two sections, namely a retaining part (1') and a connecting part (1"), which are arranged on both sides of the rib (2"').

2. A pivot bearing according to claim 1, **characterised in that** the bearing part (1) comprises a retaining part (1') which has a cross-section which substantially has the shape of a circle sector.

3. A pivot bearing according to one of the claims 1 or 2, **characterised in that** the bearing body (2, 2"', 3) has a centering part (3) which is substantially arranged in a semi-cylindrical way.

4. A pivot bearing according to claim 3, **characterised in that** the centering part (3) has a sliding surface (3") which is opposite of the rolling surface (2').

5. A pivot bearing according to one of the claims 3 or 4, **characterised in that** the centering part (3) comprises centering surfaces (3') in the region of the rib (2"').

6. A pivot bearing according to one of the claims 1 to 5, **characterised in that** the bearing body (2, 2"', 3) respectively comprises a semi-cylindrical shell (2, 3) on both sides of the rib (2"'), which shell holds the rib (2"').

7. A pivot bearing according to one of the claims 1 to 6, **characterised in that** the rolling surface (2') is sunk in relation to the central point (M) of the pivot bearing.

8. A pivot bearing according to one of the claims 1 to 7, **characterised in that** the central point (M1) of the rolling bearing (4) has a distance (d₁) from the central point (M) of the pivot bearing which is smaller than the radius (R1) of the rolling body (4).

9. A pivot bearing according to one of the claims 1 to 8, **characterised in that** the rib (2"') substantially extends along a diameter of the bearing hole.

10. A pivot bearing according to one of the claims 1 to 8, **characterised in that** the connecting part (1") has a cross-section which is substantially shaped in the manner of a circle sector.

## Revendications

1. Palier pivotant destiné à permettre le montage de pièces avec peu de frottement, comprenant un corps de palier cylindrique (2, 2"', 3) et une partie de palier (1) montée pivotante dans celui-ci, ce corps de palier (2, 2"', 3) comprenant une nervure essentiellement radiale (2"'),
**caractérisé en ce que**
sur la nervure (2"') est formée au moins une première surface de roulement (2'), et la partie de palier (1) comprend un corps de rouleau (4) comportant un segment de roulement en forme de cylindre au niveau de sa pointe qui roule sur la surface de roulement (2'), et la partie de palier (1) comprend deux segments, à savoir une partie de retenue (1') et une partie de liaison (1") qui sont situées de part et d'autre de la nervure (2"').

2. Palier pivotant conforme à la revendication 1,
**caractérisé en ce que**
la partie de palier (1) comprend une partie de retenue (1') qui a une section essentiellement en forme de secteur circulaire.

3. Palier pivotant conforme à l'une des revendications 1 et 2,
**caractérisé en ce que**
le corps de palier (2, 2"', 3) comprend une partie de centrage (3) essentiellement de forme semi-cylindrique.

4. Palier pivotant conforme à la revendication 3,
**caractérisé en ce que**
la partie de centrage (3) comprend une surface de glissement (3") située à l'opposé de la surface de roulement (2').

5. Palier pivotant conforme à l'une des revendications 3 et 4,
**caractérisé en ce que**
la partie de centrage (3) comprend des surfaces de centrage (3') dans la zone de la nervure (2"').

6. Palier pivotant conforme à l'une des revendications 1 à 5,
**caractérisé en ce que**
le corps de palier (2, 2"', 3) comprend respectivement de part et d'autre de la nervure (2"') une coquille semi-cylindrique (2, 3) qui maintient la nervure (2"').

7. Palier pivotant conforme à l'une des revendications 1 à 6,
**caractérisé en ce que**
la surface de roulement (2') est abaissée par rapport au centre (M) du palier pivotant.

8. Palier pivotant conforme à l'une des revendications 1 à 7,
**caractérisé en ce que**
le centre (M1) du corps de rouleau (4) est situé à une distance (d₁) du centre (M) du palier pivotant qui est inférieure au rayon (R1) du corps de rouleau (4).

9. Palier pivotant conforme à l'une des revendications 1 à 8,
**caractérisé en ce que**
la nervure (2"') s'étend essentiellement le long d'un diamètre de l'alésage du palier.

10. Palier pivotant conforme à l'une des revendications 1 à 8,
**caractérisé en ce que**
la partie de liaison (1") a une section essentiellement en forme de secteur circulaire.
